# FASCICULE DE BREVET EUROPEEN

(11) **EP 0 607 710 B1**
(45) Date de publication et mention de la délivrance du brevet: **31.03.1999**
(21) Numéro de dépôt: 93400102.5
(22) Date de dépôt: 18.01.1993
(51) Int. Cl.: C01B 33/145, G02B 1/10

(54) **Procédé d'obtention d'un sol de silice dispersé dans un alcanol inférieur et application de l'organosol ainsi obtenu, notamment à la préparation de compositions de revêtement de surface de verre organique**
Verfahren zur Herstellung eines in einem niederen Alkanol dispergierten Kieselsäuresols und dessen Verwendung, insbesondere für die Herstellung von Oberflächenbeschichtungszusammensetzungen von organischem Glas
Process for preparing a silica sol dispersed in a lower alcohol and use thereof, especially for the preparation of surface coating compositions for organic glass

(43) Date de publication de la demande: 27.07.1994
(73) Titulaire: Clariant (France) S.A., 92800 Puteaux (FR)
(72) Inventeur: Jacquinot, Eric, F-60350 Attichy (FR); Eranian, Armand, F-92310 Sèvres (FR)
(74) Mandataire: Rinuy, Santarelli

(56) Documents cités:
- WO-A-91/05599
- DATABASE WPI Week 9316, Derwent Publications Ltd., London, GB; AN 93-128925 & JP-A-5 064 738 (CENTRAL GLASS CO LTD) 19 Mars 1993
- DATABASE WPI Week 9115, Derwent Publications Ltd., London, GB; AN 91-107085 & JP-A-3 050 288 (MITSUBISHI KASEI VI) 4 Mars 1991
- CHEMICAL ABSTRACTS, vol. 99, no. 20, 14 Novembre 1983, Columbus, Ohio, US; abstract no. 160284t, KIMURA, SHOJI; NOMURA, TSUYOSHI 'CONCENTRATION OF ALCOHOLS BY PERVAPORATION' page 95 ;colonne D ;
- Week 8408, Derwent Publications Ltd., London, GB; AN 84-046649 & JP-A-59 008 614 (SHOKUBAI KASEI KOGYO) 17 Janvier 1984

## Description

La présente invention concerne un procédé d'obtention d'un sol de silice dispersé dans un alcanol inférieur et l'application de l'organosol ainsi obtenu, notamment à la préparation de compositions de revêtement de surface de verre organique.

Les dispersions de sol de silice dans un solvant organique sont largement connues (Ralph.K. ILER, The Chemistry of Silica, pages 412-415, John Wiley and Sons, New-York, 1979) et notamment les sols de silice dispersés dans du méthanol (brevet des Etats Unis d'Amérique N° 2736668 et H. Akabayashi et al, Kogyo Kagazu Zasshi, 68, 429, (1965)).

L'obtention d'un sol de silice dispersé dans un solvant organique possédant un point d'ébullition supérieur à celui de l'eau ne présente généralement aucune difficulté, même dans le cas où le solvant organique est non miscible à l'eau. Lorsque le solvant organique de dispersion choisi présente un point d'ébullition inférieur à celui de l'eau, il est encore possible d'obtenir relativement facilement une dispersion d'un sol de silice dans ce solvant à condition que celui-ci donne avec l'eau un azéotrope autorisant l'élimination complète de l'eau introduite avec le sol de silice aqueux de départ ; toutefois cette distillation azéotropique conduit à la formation de grandes quantités d'azéotropes qu'il est nécessaire subséquemment de traiter pour récupérer le solvant organique (brevets des Etats Unis d'Amérique N° 2433776, 2433777, 2433778, 2433779 et 2433780). Mais lorsque le solvant organique choisi est miscible à l'eau et qu'il présente un point d'ébullition inférieur à 100°c et que, de plus, il ne donne pas un azéotrope avec l'eau, il est nécessaire pour obtenir un sol de silice dispersé dans un tel solvant, soit d'utiliser des très grandes quantités de solvant (cf H.Habayashi et al, loc, cité), soit de recourir à des moyens détournés tels que l'emploi intermédiaire d'un agent lipophile de manière à rendre la surface les particules de silice hydrophobe, soit d'éliminer l'eau à l'aide de tamis moléculaires ( demande de brevet européen N° 372124 et les références citées dans cette même demande de brevet, et demande de brevet japonais N° 02(90)-275712).

On constate donc que les procédés connus d'obtention d'un sol de silice dispersé dans un alcanol inférieur présentant un point d'ébullition inférieur à 100°C et ne donnant pas avec l'eau un azéotrope sont relativement longs et onéreux. Or la demanderesse a découvert avec étonnement un moyen simple et facile pour obtenir de telles dispersions.

C'est pourquoi la présente invention concerne un procédé d'obtention d'un sol de silice dispersé dans un alcanol en C₁-C₃ contenant pondéralement moins de 1 % d'eau et jusqu'à 50 % de silice sous forme de particules discrètes d'un diamètre moyen compris entre 5 et 100 nm, non liées entre elles par des liaisons siloxane caractérisé par le fait que l'on mélange à la température ambiante un sol aqueux de silice contenant jusqu'à 50 % de silice sous forme de particules discrètes d'un diamètre moyen compris entre 5 et 100 nm, non liées entre elles par des liaisons siloxane avec au moins une partie et de préférence environ deux parties en poids par rapport au poids du sol aqueux de silice de l'alcanol en C₁-C₃ correspondant, puis que l'on soumet ce mélange à une pervaporation à une température inférieure ou égale à 80 °C jusqu'à l'obtention d'une dispersion contenant pondéralement moins de 1 % d'eau.

La proportion d'eau peut être déterminée par exemple par mise en oeuvre de la méthode de Karl Fisher sur des prises d'essai.

Par pervaporation, on désigne un procédé membranaire d'élimination de l'eau (E.DINGER, Chem. Techno. (Heidelberg) 1990, 19(5), 50-52).

Par alcanol en C₁-C₃ on désigne le méthanol, l'éthanol, le propanol-1 et le propanol-2.

Les sols aqueux de silice utilisés sont des sols aqueux de silice tels que ceux commercialisés par la demanderesse sous la dénomination KLEBOSOL^{R}, sous leur forme acide.

La présente demande a particulièrement pour objet le procédé ci-dessus décrit, caractérisé en ce que l'alcanol en C₁-C₃ est le méthanol, l'éthanol, le propanol-1 et le propanol-2.

Il est connu que l'éthanol, le propanol-1 et le propanol-2 donnent avec l'eau des aséotropes binaires présentant respectivement un point d'ébullition de 78,2 °C, 88,1 °C et 80,4 °C, et contenant pondéralement respectivement 4,4 %, 28,2 % et 12, 2 % d'eau. L'élimination de 100 g d'eau par distillation azéotropique avec l'un de ces alcanols en C₂-C₃ exige donc théoriquement 2180 g d'éthanol, 255 g de propanol-1 et 720 g de propanol-2 à une température supérieure ou égale à 78 °C. Or dans ce cas des alcanols en C₂-C₃, le procédé de la présente invention ne consomme pratiquement pas d'alcanol : l'alcanol en C₂-C₃ introduit au départ se retrouve pratiquement en totalité dans l'organosol final.

Avec le méthanol qui ne donne pas d'azéotrope binaire avec l'eau, le procédé selon la présente invention consomme environ 62 g de méthanol pour éliminer 100 g d'eau (cf exemple 2).

En conséquence, le procédé selon l'invention est moins onéreux que les procédés antérieurs connus. De plus, il conduit à des produits extrêmement purs, car au cours du procédé, le sol de silice ne subit aucune modification chimique intermédiaire de surface par l'emploi de réactifs spéciaux tels que les organosilanes (cf demande de brevet européen N° 372124).

Le procédé selon la présente invention permet d'obtenir des dispersions de silice colloïdale dans un alcanol en C¹-C₃ présentant d'excellentes propriétés applicatives notamment pour l'obtention de compositions destinées aux revêtements de verres organiques afin en particulier de les protéger contre les éraflures.

C'est pourquoi la présente demande a aussi pour objet l'utilisation d'un sol de silice obtenu selon le procédé ci-dessus, à l'obtention de compositions destinées au revêtement des verres organiques.

Dans les exemples suivants, nous avons utilisé une unité de pervaporation construite par la Société GFT, le Carbone-Lorraine, Cedex 21, 92095 PARIS LA DEFENSE 2.

### EXEMPLE 1

On mélange à la température ambiante sous agitation :
- 70 g de "KLEBOSOL" 1344 H., commercialisé par la demanderesse, contenant 30 % en poids de silice sous forme de particules discrètes d'un diamètre moyen de 13 nm et non liées entre elles par des liaisons siloxane, et présentant un pH de 2, avec 140 g d'éthanol.
   Ce mélange est traité durant 10 heures à une température de 80 °C, dans une unité de pervaporation définie précédemment, équipée d'une membrane résistante aux acides, d'une surface de 20 cm². On obtient ainsi 161,5 g d'une dispersion de silice colloïdale dans l'éthanol contenant pondéralement 13,0 % de silice sous forme de particules discrètes d'un diamètre moyen de 13 nm et non liées entre elles par des liaisons siloxane, 86, 3 % d'éthanol et 0,7 % d'eau déterminée par K.FISHER.

### EXEMPLE 2

On mélange à la température ambiante 150 g de "KLEBOSOL" 1344 H avec 170 g de méthanol, puis on soumet le mélange obtenu pendant 45 heures, à une température de 75 °C, à une pervaporation avec une membrane résistante aux acides d'une surface de 40 cm². On obtient ainsi 151 g d'une dispersion de silice colloïdale dans le méthanol contenant pondéralement 29,8 % de silice sous forme de particules discrètes d'un diamètre moyen de 13 nm et non liées entre elles par des liaisons siloxane, 69, 5 % de méthanol et 0,7 % d'eau. Par ailleurs, on récupère 169 g d'une solution contenant 38,5 % de méthanol et 61, 5 % d'eau.

## Revendications

1. Procédé d'obtention d'un sol de silice dispersé dans un alcanol en C₁-C₃ contenant pondéralement moins de 1 % d'eau et jusqu'à 50 % de silice sous forme de particules discrètes d'un diamètre moyen compris entre 5 et 100 nm, non liées entre elles par des liaisons siloxane, caractérisé par le fait que l'on mélange à la température ambiante un sol aqueux de silice contenant jusqu'à 50 % de silice sous forme de particules discrètes d'un diamètre moyen compris entre 5 et 100 nm, non liées entre elles par des liaisons siloxane, avec au moins une partie en poids par rapport au sol aqueux de silice de l'alcanol en C₁-C₃ correspondant, puis que l'on soumet ce mélange à une pervaporation à une température inférieure ou égale à 80 °C jusqu'à l'obtention d'une dispersion contenant pondéralement moins de 1 % d'eau.

2. Procédé selon la revendication 1, caractérisé par le fait que l'alcanol en C₁-C₃ est le méthanol.

3. Procédé selon la revendication 1, caractérisé par le fait que l'alcanol en C₁-C₃ est l'éthanol.

4. Procédé selon la revendication 1, caractérisé par le fait que l'alcanol en C₁-C₃ est le propanol-1

5. Procédé selon la revendication 1, caractérisé par le fait que l'alcanol en C₁-C₃ est le propanol-2.

## Claims

1. Process for obtaining a silica sol dispersed in a C₁-C₃ alkanol containing, by weight, less than 1% water and up to 50% silica in the form of discrete particles having an average diameter of between 5 and 100 nm, not linked together by siloxane bonds, characterized in that an aqueous silica sol containing up to 50% silica in the form of discrete particles having an average diameter of between 5 and 100 nm, not linked together by siloxane bonds, is mixed at ambient temperature with at least one part by weight relative to the aqueous silica sol of a corresponding C₁-C₃ alkanol, then that this mixture is subjected to a pervaporation at a temperature lower than or equal to 80°C until a dispersion containing, by weight, less than 1% water is obtained.

2. Process according to claim 1, characterized in that the C₁-C₃ alkanol is methanol.

3. Process according to claim 1, characterized in that the C₁-C₃ alkanol is ethanol.

4. Process according to claim 1, characterized in that the C₁-C₃ alkanol is 1-propanol.

5. Process according to claim 1, characterized in that the C₁-C₃ alkanol is 2-propanol.

## Patentansprüche

1. Verfahren zur Herstellung eines in einem C₁-C₃-Alkanol dispergierten Siliziumdioxidsols, enthaltend, in Gewicht, weniger als 1 % Wasser und bis zu 50 % Siliziumdioxid in Form von diskreten Teilchen mit einem mittleren Durchmesser zwischen 5 und 100 nm, die untereinander nicht durch Siloxanbindungen verbunden sind, dadurch gekennzeichnet, daß man bei Umgebungstemperatur ein bis zu 50 % Siliziumdioxid in Form von diskreten Teilchen mit einem mittleren Durchmesser zwischen 5 und 100 nm, die untereinander nicht durch Siloxanbindungen verbunden sind, enthaltendes, wässriges Siliziumdioxidsol mit wenigstens einem Gewichtsteil, bezogen auf das wässrige Siliziumdioxidsol, des entsprechenden C₁-C₃-Alkanols vermischt, dann dieses Gemisch einer Pervaporation bei einer Temperatur unterhalb oder gleich 80°C bis zum Erhalt einer Dispersion, die weniger als 1 %, in Gewicht, an Wasser enthält, unterwirft.

2. Verfahren nach Anspruch 1, dadurch gekennzeichnet, daß das C₁-C₃-Alkanol Methanol ist.

3. Verfahren nach Anspruch 1, dadurch gekennzeichnet, daß das C₁-C₃-Alkanol Ethanol ist.

4. Verfahren nach Anspruch 1, dadurch gekennzeichnet, daß das C₁-C₃-Alkanol 1-Propanol ist.

5. Verfahren nach Anspruch 1, dadurch gekennzeichnet, daß das C₁-C₃-Alkanol 2-Propanol ist.
